# EUROPEAN PATENT SPECIFICATION

(11) **EP 3 619 902 B1**
(45) Date of publication and mention of the grant of the patent: **13.10.2021**
(21) Application number: 18709378.6
(22) Date of filing: 14.03.2018
(51) Int. Cl.: H04L 29/06, H04W 36/00

(54) **IMPROVED HANDOVER OF AN IMS SERVICE SESSION**
VERBESSERTES HANDOVER EINER IMS SERVICE SESSION
TRANSFERT AMÉLIORÉ D'UNE SESSION IMS

(30) Priority: 04.05.2017 EP 17169551
(43) Date of publication of application: 11.03.2020
(73) Proprietor: Deutsche Telekom AG, 53113 Bonn (DE)
(72) Inventor: DENNERT, Thomas, Troisdorf 53844 (DE); LAUSTER, Reinhard, 3100 St. Pölten (AT); ALEKSIEV, Vasil, 1220 Wien (AT)
(74) Representative: Schwöbel, Thilo K.
(86) International application number: PCT/EP2018/056446
(87) International publication number: WO 2018/202349

(56) References cited:
- WO-A1-2011/038554
- US-A1- 2011 077 058
- "3rd Generation Partnership Project; Technical Specification Group Services and Architecture; Feasibility Study on Multimedia Session Continuity; Stage 2 (Release 8)", 3GPP DRAFT; 23893-800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725694, Retrieved from the Internet: URL:http://www.3gpp.org/ftp/tsg_sa/WG2_Arc h/Latest_SA2_Specs/Rel-8/ [retrieved on 2013-07-23]
- "3rd Generation Partnership Project; Technical Specification Group Core Network and Terminals; Study on technical aspects on roaming end-to-end scenarios with Voice over LTE (VoLTE) IP Multimedia Subsystem (IMS) and other networks (Release 14)", 3GPP STANDARD ; TECHNICAL REPORT ; 3GPP TR 29.949, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V14.0.0, 24 March 2017 (2017-03-24), pages 1-106, XP051295704, [retrieved on 2017-03-24]
- "3rd Generation Partnership Project; Technical Specification Group Services and System Aspects; 3G security; Handover interface for Lawful Interception (LI) (Release 14)", 3GPP STANDARD ; TECHNICAL SPECIFICATION ; 3GPP TS 33.108, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V14.0.0, 17 March 2017 (2017-03-17), pages 1-314, XP051290774, [retrieved on 2017-03-17]

## Description

### BACKGROUND

Improved handling of internet protocol multimedia subsystem services is required and desired to enhance the user experience, quality of service, handling of charging and compliance with (local) legal regulations. A special situation concerns handover procedures for user equipments between different public land mobile networks (PLMN), especially in case the public land mobile networks are visited public land mobile networks. Different public land mobile networks may require different charging (in roaming scenarios). Different public land mobile networks might also be associated to different legal regulations and legal requirements (e.g., in case that the public land mobile networks are associated to different countries). As a consequence, the handling of services (e.g., Voice over IP calls) in case of inter-PLMN handovers requires special procedures to guarantee a high quality of service. Methods known from the state of the art have the disadvantage that quickly and adequately adapting to changing connection conditions is not possible.

3GPP Technical Report TR 23.893 V8.O.O (2008-06) "3rd Generation Partnership Project; Technical Specification Group Services and Architecture; Feasibility Study on Multimedia Session Continuity; Stage 2 (Release 8)" relates to Stage 2 requirements for multimedia service continuity and discloses IMS-level architectures and solutions that can enable multimedia service continuity.

3GPP Technical Specification TS 33.108 VI 4.0.0 (2017-03) "3rd Generation Partnership Project; Technical Specification Group Services and System Aspects; 3G security; Handover interface for Lawful Interception (LI) (Release 14)" addresses the handover interfaces for lawful interception of Packet-Data Services, Circuit Switched Services, Multimedia Services within the Universal Mobile Telecommunication System (UMTS) and Evolved Packet System (EPS). It defines the handover interfaces for delivery of lawful interception Intercept Related Information (IRI) and Content of Communication (CC) to the Law Enforcement Monitoring Facility (LEMF).

### SUMMARY

An object of the present invention is to provide an improved method for handling an internet protocol multimedia subsystem service of a user equipment in case of inter-public land mobile network handovers.

The object of the present invention is achieved by a method according to claim 1.

According to the present invention, it is thereby possible that handovers between public land mobile networks (e.g., the first public land mobile network and the second public land mobile network) are improved. In particular, it is possible that an application server which is involved in providing an internet protocol multimedia subsystem service (or provides the service) is informed about a handover of a user equipment (using the internet protocol multimedia subsystem service) between a first and a second public land mobile network, even in case that the internet protocol multimedia subsystem service is still ongoing. For this purpose, it is possible that a current public land mobile network information is transmitted to the application server by a call state control function node (possibly via intermediate network nodes), wherein the current public land mobile network information informs the application server about the inter-public land mobile network handover and/or about which public land mobile network the user equipment is currently connected to (i.e., that the user equipment is connected to the second public land mobile network after the handover of the first step). According to the present invention, it is advantageously possible that charging measures can be adapted quickly and precisely, especially in case that there are roaming agreements with the second and/or the first public land mobile network and/or between the second and first public land mobile network. Furthermore, it is advantageously possible according to the present invention that the application server is informed quickly (especially while the internet protocol multimedia subsystem service is still accessed/used by the user equipment, for instance while a Voice over IP call is still ongoing) about a change of the public land mobile network that the user equipment is connected to. It is therefore possible that a fast reaction to eventual changing legal requirements can be made, e.g., in case the second and first public land mobile networks are associated to different jurisdictions. According to the present invention, it is possible that the internet protocol multimedia subsystem service is, e.g., an internet protocol multimedia subsystem streaming service or an internet protocol multimedia subsystem conversational service, for instance a voice over internet protocol service (or voice over LTE, VoLTE, service).

By contrast, in known public land mobile network architectures, it is not possible that relevant entities involved in offering internet protocol multimedia subsystem services are informed about an inter-public land mobile network handover quickly (e.g., while a VoIP call is still ongoing), which poses significant problems for charging matters and makes following special legal requirements which might be associated to specific public land mobile network s (e.g., for specific countries) difficult or impossible.

According to an embodiment of the present invention, the current public land mobile network information is transmitted as part of a notification message to the application server, wherein the notification message especially comprises a private visited network identifier header information.

According to an embodiment of the present invention, the notification message is a session initiation protocol message.

Thereby, it is advantageously possible according to an embodiment of the present invention that the inventive method is compatible with existing internet protocol multimedia subsystem networks. It is especially possible that signaling according to the session initiation protocol is used to transmit the current public land mobile network information to the application server by using session initiation protocol-info messages and/or session initiation protocol-update messages.

According to an embodiment of the present invention, - subsequent to the second step - the application server processes and/or handles
-- charging procedures and/or
-- call related procedures and/or
-- lawful interception, based on the current public land mobile network information.

It is thereby advantageously possible according to an embodiment of the present invention that the application server is at least involved in processing and/or handling charging and call related procedures based on the current public land mobile network information which the application server receives in the second step. It is furthermore possible that the application server is at least involved in handling (and possibly applying actions based on) legal requirements (especially relevant for and/or associated to the second public land mobile network), like lawful interception, based on the current public land mobile network information which the application server receives in the second step.

According to an embodiment of the present invention, - besides the call state control function node, and the application server - a packet gateway node of an evolved packet core network is used to enable or provide the internet protocol multimedia subsystem service of or to the user equipment according to a home routing scenario, irrespective of whether the first access network of the first public land mobile network, or the second access network of the second public land mobile network, is used by the user equipment.

It is thereby advantageously possible according to an embodiment of the present invention that the inventive method is applicable for home routing scenarios, wherein a packet gateway node of an evolved packet core network takes part in enabling and/or providing the internet protocol multimedia subsystem service (for and/or to the user equipment). It is especially possible that the packet gateway node taking part in providing the internet protocol multimedia subsystem service if the user equipment is connected to the first public land mobile network also takes part in providing the internet protocol multimedia subsystem service if the user equipment is connected to the second public land mobile network. It is thereby possible that the packet gateway node informs the call state control function node (directly and/or via intermediate network entities like a policy and charging rules function) about the handover of the first step and/or that the user equipment is connected to the public land mobile communication network after the first step.

According to an embodiment of the present invention, the call state control function node corresponds to a proxy call state control function node and is especially connected and/or associated to a policy and charging rules function node, and the call state control function node especially being connected to the policy and charging rules function node via a Gx/Rx interface or reference point.

Thereby, it is advantageously possible according to an embodiment of the present invention that the call state control function node is a proxy call state control function node. It is also possible that the proxy call state control function node is subscribed to a policy and charging rules function node, wherein the policy and charging rules function node can inform the a proxy call state control function node about which public land mobile network the user equipment is connected to (and also whether a handover of the user equipment between a first and a second public land mobile network occurs).

According to an embodiment of the present invention, prior to the second step, the policy and charging rules function node transmits an information about the public land mobile network currently used by the user equipment.

Thereby, it is advantageously possible according to an embodiment of the present invention that the policy and charging rules function node, which is aware of the handover procedure that occurs in the first step, transmits an information about the public land mobile network used by the user equipment (e.g., the second public land mobile network that the user equipment is connected to after the handover procedure) to the call state control function node (possibly via intermediate network entities).Thereby, it is possible that the call state control function node is informed about the handover and/or that the user equipment is connected to the second public land mobile network after the handover of the first step. Thereby, it is especially possible that the call state control function node (e.g., the proxy call state control function node) is always aware in which public land mobile network the subscriber (i.e., the user equipment) is currently located by receiving a public land mobile network change notification (comprising information about the public land mobile network currently used by the user equipment) from the policy and charging rules function node, especially when the public land mobile network that the user equipment is connected to changes. It is therefore possible that the call state control function node transmits the current public land mobile network information to the application server in the second step, possibly via intermediate network nodes, (and thereby informs the application server about the handover and/or that the user equipment is connected to the second public land mobile network after the first step).

According to an embodiment of the present invention, - dependent on whether the first access network of the first public land mobile network , or the second access network of the second public land mobile network, is used by the user equipment - a different packet gateway node, of either the first public land mobile network or the second public land mobile network is used, according to a local breakout scenario, to enable or provide the internet protocol multimedia subsystem service of or to the user equipment.

Thereby, it is possible according to an embodiment of the present invention that the inventive method is applicable for local breakout scenarios. In this regard, it is possible that a first packet gateway node is involved in enabling/providing the internet protocol multimedia subsystem service when the user equipment is connected to the first public land mobile network and that a second packet gateway node (different from the first packet gateway node) is involved in enabling/providing the internet protocol multimedia subsystem service when the user equipment is connected to the second public land mobile network.

According to an embodiment of the present invention, the call state control function node corresponds to a serving call state control function node, and wherein the user equipment uses a first proxy call state control function of the first public land mobile network or a second proxy call state control function of the second public land mobile network in dependency of whether the first access network of the first public land mobile network, or the second access network of the second public land mobile network, is used by the user equipment, wherein, prior to the second step, the policy and charging rules function node transmits an information about the public land mobile network currently used by the user equipment.

It is thereby possible according to an embodiment of the present invention that the call state control function node is a serving call state control function node, especially in case of local breakout scenarios. It is possible that a first proxy call state control function of the first public land mobile network is used, when the user equipment is connected to the first public land mobile network, and a second proxy call state control function of the second public land mobile network is used when the user equipment is connected to the second public land mobile network. It is advantageously possible that - prior to the second step and especially after the handover of the first step has occurred - the policy and charging rules function node transmits information about the public land mobile network currently used by the user equipment (which is, after the handover, the second public land mobile network) to the serving call state control function node, especially via an (or many) intermediate network entities, like a proxy call state control function. Thereby, it is possible that the serving call state control function node is informed about the handover and/or that the user equipment is connected to the second public land mobile network (after the handover of the first step has occurred).

It is possible according to embodiments of the present invention that the packet gateway node is comprised in the first public land mobile network and that the policy and charging rules function node is also comprised in the first public land mobile network. It is preferred that the first public land mobile network is the home network of the user equipment in this case.

However, it is also possible that the is comprised in a further public land mobile network and that the policy and especially that the charging rules function node is also comprised in a further public land mobile network, wherein the further public land mobile network acts as (or is) the home network of the user equipment, wherein the first public land mobile network and the second public land mobile network are visited networks of the user equipment.

The object of the present invention is also achieved by a public land mobile network according to claim 10, a system according to claim 11, a program according to claim 12, and a computer-readable storage medium according to claim 13

The inventive system, public land mobile network, program and computer-readable storage medium share the advantages described for the inventive method and embodiments of the inventive method.

These and other characteristics, features and advantages of the present invention will become apparent from the following detailed description, taken in conjunction with the accompanying drawings. The reference figures quoted below refer to the attached drawings.

### BRIEF DESCRIPTION OF THE DRAWINGS

**Figure 1** schematically illustrates a system according to a first exemplary embodiment of the present invention.
**Figure** 2 schematically illustrates a system according to a second exemplary embodiment of the present invention.
**Figure 3** schematically illustrates a flow diagram according to a first exemplary embodiment of the present invention.
**Figure 4** schematically illustrates a flow diagram according to a second exemplary embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order.

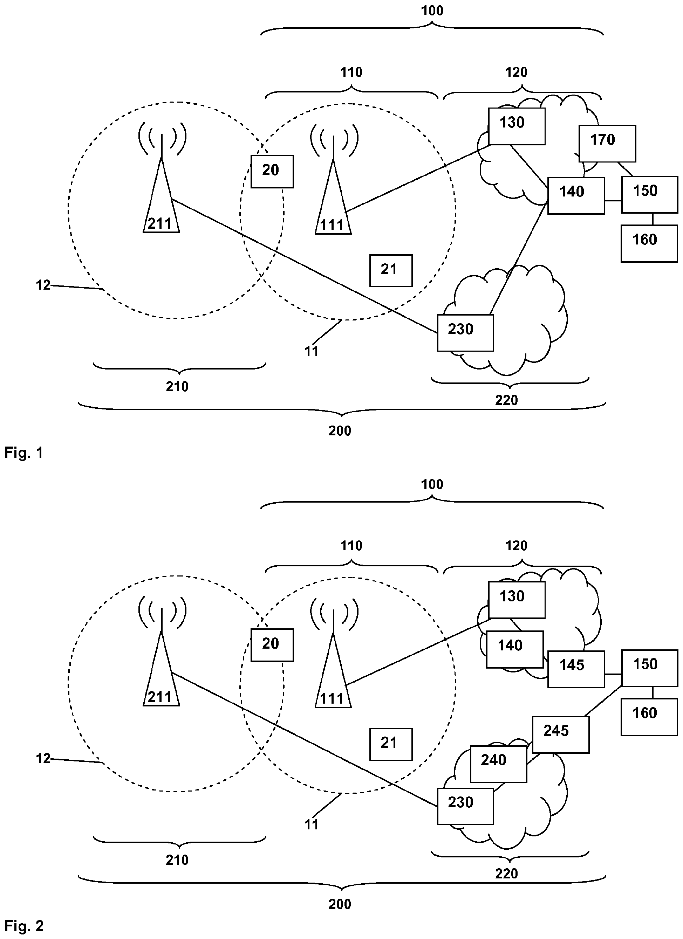

In **Figure 1****,** a system according to a first exemplary embodiment of the present invention is schematically illustrated. The system comprises a first public land mobile network 100 and second public land mobile network 200. The first public land mobile network 100 comprises a first access network 110 and a first core network 120. The second public land mobile network 200 comprises a second access network 210 and a second core network 220. The first access network 110 comprises at least a first base station entity 111 (and typically a plurality of base station entities) that serves a first radio cell 11. Likewise, the second access network 210 comprises at least a second base station entity 211 (and typically a plurality of base station entities) that serves a second radio cell 12. Furthermore, the system comprises a user equipment 20. Usually further user equipments 21 are also located within the coverage area of the first and/or second base station entity 111, 211 as well. Furthermore, a call state control function node 150 and an application server 160 are shown. The call state control function node 150 and the application server 160 are used to enable and/or provide an internet protocol multimedia subsystem service of and/or to a user equipment 20, especially an internet protocol multimedia subsystem streaming service or an internet protocol multimedia subsystem conversational service, for instance a voice over internet protocol service (or voice over LTE, VoLTE, service). Therein, it is possible that the user equipment 20, in order to receive the internet protocol multimedia subsystem conversational service (and/or access the service), is able to either use the first public land mobile network 100 or the second public land mobile network 200 by using either a first access network 110 and a first serving gateway node 130 of the first public land mobile network 100 or a second access network 210 and a second serving gateway node 230 of the second public land mobile network 200. In addition to the call state control function node 150 and the application server 160, a packet gateway node 140, for enabling and/or providing the internet protocol multimedia subsystem conversational service of or to the user equipment 20 irrespective of whether the first access network 110 or the second access network 210 is used by the user equipment 20, is shown. Thus, disregarding of whether the user equipment 20 is connected to the first or the second public land mobile network 100, 200 the (same) packet gateway node 140 is used for the internet protocol multimedia subsystem conversational service (in particular in case the user equipment changes from being connected to the first access network 100 to the second access network 200, while the internet protocol multimedia subsystem conversational service is still ongoing). According the first exemplary embodiment of the present invention, it is possible to enable and/or to provide an internet protocol multimedia subsystem conversational service according to a home routing scenario. Therein, it is preferred that the call state control function node 150 corresponds to a proxy call state control function node. The call state control function node 150 (proxy call state control function node) is connected and/or associated to a policy and charging rules function node 170 via a Gx/Rx interface or reference point.

It is possible according to the present invention that the packet gateway node 140 is comprised in the first public land mobile network 100 and that the policy and charging rules function node 170 is also comprised in the first public land mobile network 100. It is preferred that the first public land mobile network 100 is the home network of the user equipment 20 in this case. However, it is also possible that the 140 is comprised in a further public land mobile network and that the policy and charging rules function node 170 is also comprised in a further public land mobile network, wherein the further public land mobile network acts as the home network of the user equipment 20, wherein the first public land mobile network 100 and the second public land mobile network 200 are visited networks of the user equipment 20.

In **Figure 2****,** a system according to a second embodiment of the present invention is schematically illustrated. The system comprises a first public land mobile network 100 and second public land mobile network 200. The first public land mobile network 100 comprises a first access network 110 and a first core network 120. The second public land mobile network 200 comprises a second access network 210 and a second core network 220. The first access network 110 comprises at least a first base station entity 111 (and typically a plurality of base station entities) that serves a first radio cell 11. Likewise, the second access network 210 comprises at least a second base station entity 211 (and typically a plurality of base station entities) that serves a second radio cell 12. Furthermore, the system comprises a user equipment 20. Usually further user equipments 21 are also located within the coverage area of the first and/or second base station entity 111, 211. Furthermore, a call state control function node 150 and an application server 160 are shown. The call state control function node 150 and the application server 160 are used to enable and/or provide an internet protocol multimedia subsystem service of and/or to a user equipment 20, especially an internet protocol multimedia subsystem streaming service or an internet protocol multimedia subsystem conversational service, for instance a voice over internet protocol service (or voice over LTE, VoLTE, service). It is possible that the user equipment 20 is either connected to the first access network 100 or to the second access network 200. It is also possible according to embodiments of the present invention that there are further public land mobile networks with access networks and core networks that the user equipment 20 can potentially be connected to. In order to receive the internet protocol multimedia subsystem conversational service (and/or access the service or take part in it), the user equipment 20 is able to either use the first public land mobile network 100 or the second public land mobile network 200 by using either a first access network 110 and a first serving gateway node 130 of the first public land mobile network 100 or a second access network 210 and a second serving gateway node 230 of the second public land mobile network 200. For enabling and/or providing the internet protocol multimedia subsystem conversational service of or to the user equipment 20, a different packet gateway node is used (i.e. involved in providing/enabling the service), depending on whether the user equipment 20 is connected to the first access network 110 or to the second access network 210, in accordance with local breakout scenarios. In particular, a first packet gateway node 140 of the first public land mobile network 100 is used in case the user equipment 20 is connected to the first access network 110 and a second packet gateway node 240 of the second public land mobile network 200 is used in case the user equipment 20 is connected to the second access network 210. Furthermore, especially in case of local breakout scenarios, according to the present invention, the call state control function node 150 corresponds to a serving call state control function node and the user equipment 20 uses/is served by a first proxy call state control function 145 of the first public land mobile network 100 if the user equipment is connected to the first access network 110. Likewise, the user equipment 20 uses/is served by a second proxy call state control function 245 of the second public land mobile network 200 if the user equipment 20 is connected to the first access network 210. It is also possible that the call state control function node 150 is connected to (possibly via intermediate network entities) and/or associated to a policy and charging rules function node 170.

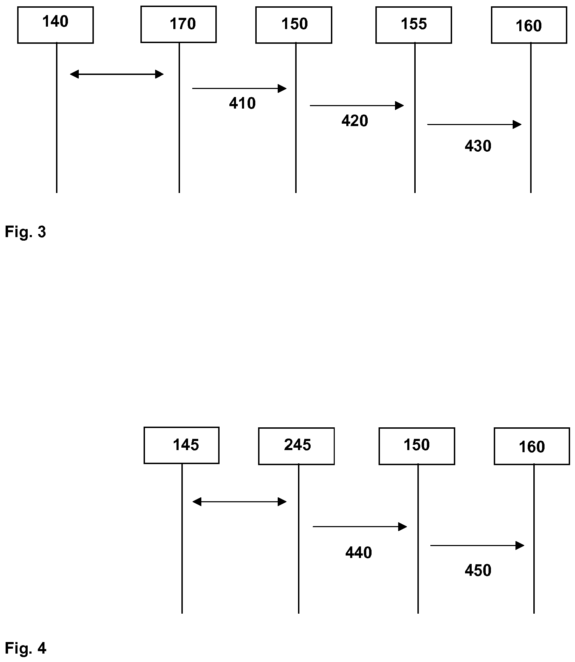

In **Figure 3****,** a flow diagram according to a first exemplary embodiment of the present invention is schematically illustrated. The illustrated process flow is particularly relevant for home routing scenarios like S8HR. Prior to a first step, a user equipment 20 is connected to a first public land mobile network 100 via a first access network 110. The user equipment 20 receives or uses an internet protocol multimedia subsystem conversational service, wherein a call state control function node 150 and an application server 160 are being used to enable or provide the internet protocol multimedia subsystem conversational service of or to the user equipment 20. The call state control function node 150 is a proxy call state control function node 150. Furthermore, a packet gateway node 140 of an evolved packet core network is used to enable or provide the internet protocol multimedia subsystem conversational service of or to the user equipment 20 according to a home routing scenario. The packet gateway node 140 is used irrespective of whether the first access network 110 of the first public land mobile network 100 or the second access network 210 of the second public land mobile network 200 is used by the user equipment 20. Additionally, a policy and charging rules function node 170 is involved in the method. The policy and charging rules function node 170 is connected to the packet gateway node 140, and the call state control function node 150 is especially connected to the policy and charging rules function node 170 via a Gx/Rx interface or reference point. According to the first exemplary embodiment of the present invention, an inter-public land mobile network handover of the user equipment 20 occurs or is triggered such that the user equipment 20 changes from being connected to the first access network 110 to being connected to a second access network 210 of a second public land mobile network 200 in a first step. The policy and charging rules function node 170 notices and/or is informed about the handover of the first step (especially by the packet gateway node 140). Thereafter, the policy and charging rules function node 170 transmits an information about the public land mobile network currently used by the user equipment 20 to the proxy call state control function node 150 as part of a first process step 410. Thereby, the proxy call state control function node 150 receives information about the inter-public land mobile network handover of the first step. In the following (i.e. after the first process step 410), a current public land mobile network information is transmitted by the call state control function node 150 to the application server 160 in a second step, which can, e.g., occur in detail as follows: as part of the second step, the proxy call state control function node 150 transmits the current public land mobile network information to a serving call state control function node 155, which is connected to the application server 160, in a second process step 420. After the second process step 420, the serving call state control function node 155 transmits the current public land mobile network information to the application server 160 in a third process step 430.

The current public land mobile network information indicates or comprises an indication that the user equipment 20 uses the second access network 210 of the second public land mobile network 200 instead of the first access network 110 of the first public land mobile network 100 (i.e. that the handover of the first step occurred). The messages sent in the second process step 420 and the third process step 430 can preferably be notification messages, especially comprising a private visited network identifier header information. The notification messages of the second process step 420 and the third process step 430 can preferably be session initiation protocol messages like SIP INFO and/or SIP UPDATE messages.

Thereby, the application server 160 is informed about the handover of the first step. As a consequence, it is possible that the application server 160 - subsequent to the second step - processes and/or handles charging and call related procedures and/or legal requirements, like lawful interception, based on the current public land mobile network information, which the application server 160 received in the second step.

In **Figure 4****,** a flow diagram according to a second exemplary embodiment of the present invention is schematically illustrated. The illustrated process flow is particularly relevant for local breakout scenarios (e.g., LBO, RAVEL). Prior to a first step, a user equipment 20 is connected to a first public land mobile network 100 via a first access network 110. The user equipment 20 receives or uses an internet protocol multimedia subsystem conversational service, wherein a call state control function node 150 and an application server 160 are being used to enable or provide the internet protocol multimedia subsystem conversational service of or to the user equipment 20. The call state control function node 150 is a serving call state control function node 150. Furthermore, dependent on whether the first access network 110 of the first public land mobile network 100, or the second access network 210 of the second public land mobile network 200, is used by the user equipment 20 - a different packet gateway node, of either the first public land mobile network 100 or the second public land mobile network 200 is used, according to a local breakout scenario, to enable or provide the internet protocol multimedia subsystem conversational service of or to the user equipment 20. The user equipment 20 uses a first proxy call state control function 145 of the first public land mobile network 100 or a second proxy call state control function 245 of the second public land mobile network 200 in dependency of whether the first access network 110 or the second access network 210 is used by the user equipment 20. According to the second exemplary embodiment of the present invention, an inter-public land mobile network handover of the user equipment 20 occurs or is triggered such that the user equipment 20 changes from being connected to the first access network 110 to being connected to a second access network 210 of a second public land mobile network 200 in a first step. The second proxy call state control function 245 notices (recognizes or is informed) about the handover of the first step, e.g., by the first proxy call state control function 145. In a fourth process step 440 - prior to a second step and/or as part of the second step - the second proxy call state control function 245 transmits an information about the public land mobile network currently used by the user equipment 20 (i.e. that the handover of the first step occurred) to the serving call state control function node 150 and thereby informs the serving call state control function node 150 about the handover of the first step. Subsequently, in a fifth process step 450, as part of the second step, a current public land mobile network information is transmitted, by the call state control function node 150 to the application server 160. The current public land mobile network information indicates to the application server 160 that the user equipment 20 uses the second access network 210 of the second public land mobile network 200 instead of the first access network 110 of the first public land mobile network 100.

It is also possible that a policy and charging rules function node 170 is involved in the process flow (not shown in Figure 4). In particular, the policy and charging rules function node 170 may inform the second proxy call state control function 245 and/or the serving call state control function node 150 about the handover of the first step (especially after the first step and potentially prior to the fourth process step 440).

Furthermore, the messages sent in the fourth process step 440 and the fifth process step 450 can preferably be notification messages, especially comprising a private visited network identifier header information. The notification messages of the fourth process step 440 and the fifth process step 450 can preferably be session initiation protocol messages like SIP INFO and/or SIP UPDATE messages.

Thereby, the application server 160 is informed about the handover of the first step. As a consequence, it is possible that the application server 160 - subsequent to the second step - processes and/or handles charging and call related procedures and/or legal requirements, especially lawful interception, based on the current public land mobile network information.

## Claims

1. Method for an improved handling of an internet protocol multimedia subsystem service of a user equipment (20) in the context of an ongoing session, wherein
-- a call state control function node (150), and
-- an application server (160)
are being used to enable or provide the internet protocol multimedia subsystem service of or to the user equipment (20),
wherein the user equipment (20), in order to receive the internet protocol multimedia subsystem service, is able to either use a first public land mobile network (100) or a second public land mobile network (200) by using either a first access network (110) and a first serving gateway node (130) of the first public land mobile network (100) or a second access network (210) and a second serving gateway node (230) of the second public land mobile network (200), wherein, while the user equipment (20) being connected to the first access network (110) of the first public land mobile network (100) and the session being ongoing, the method comprises the following steps:
-- in a first step, an inter-public land mobile network handover of the user equipment (20) occurs or is triggered such that the user equipment (20) is or is to be connected to the second access network (210) of the second public land mobile network (200) instead of being connected to the first access network (110) of the first public land mobile network (100),
-- in a second step, subsequent to or partly overlapping with the first step, a current public land mobile network information is transmitted, by the call state control function node (150) to the application server (160), the current public land mobile network information indicating, to the application server (160), that the user equipment (20) uses the second access network (210) of the second public land mobile network (200) instead of the first access network (110) of the first public land mobile network (100),
wherein - subsequent to the second step - the application server (160) processes and/or handles legal requirements based on the current public land mobile network information.

2. Method according to claim 1, wherein the current public land mobile network information is transmitted as part of a notification message to the application server (160), wherein the notification message especially comprises a private visited network identifier header information.

3. Method according to claim 2, wherein the notification message is a session initiation protocol message.

4. Method according to one of the preceding claims, wherein - subsequent to the second step - the application server (160) processes and/or handles
-- charging procedures and/or
-- call related procedures and/or
-- lawful interception,
based on the current public land mobile network information.

5. Method according to one of the preceding claims, wherein - besides the call state control function node (150), and the application server (160) - a packet gateway node (140) of an evolved packet core network is used to enable or provide the internet protocol multimedia subsystem service of or to the user equipment (20) according to a home routing scenario, irrespective of whether the first access network (110) of the first public land mobile network (100), or the second access network (210) of the second public land mobile network (200), is used by the user equipment (20).

6. Method according to one of the preceding claims, wherein the call state control function node (150) corresponds to a proxy call state control function node and is especially connected and/or associated to a policy and charging rules function node (170), and the call state control function node (150) especially being connected to the policy and charging rules function node (170) via a Gx/Rx interface or reference point.

7. Method according to claim 6, wherein, prior to the second step, the policy and charging rules function node (170) transmits an information about the public land mobile network currently used by the user equipment (20) to the call state control function node (150).

8. Method according to one of the preceding claims, wherein - dependent on whether the first access network (110) of the first public land mobile network (100), or the second access network (210) of the second public land mobile network (200), is used by the user equipment (20) - a different packet gateway node, of either the first public land mobile network (100) or the second public land mobile network (200) is used, according to a local breakout scenario, to enable or provide the internet protocol multimedia subsystem service of or to the user equipment (20).

9. Method according to one of claims 6 to 8, wherein the call state control function node (150) corresponds to a serving call state control function node, and wherein the user equipment (20) uses a first proxy call state control function (145) of the first public land mobile network (100) or a second proxy call state control function (245) of the second public land mobile network (200) in dependency of whether the first access network (110) of the first public land mobile network (100), or the second access network (210) of the second public land mobile network (200), is used by the user equipment (20), wherein, prior to the second step, the policy and charging rules function node (170) transmits an information about the public land mobile network currently used by the user equipment (20) to the serving call state control function node.

10. Public land mobile network (100) for an improved handling of an internet protocol multimedia subsystem service of a user equipment (20) in the context of an ongoing session, wherein the public land mobile network (100) comprises an application server (160) and a call state control function node (150), wherein
-- the call state control function node (150) of the public land mobile network (100), and
-- the application server (160) of the public land mobile network (100) are being used to enable or provide the internet protocol multimedia subsystem service of or to the user equipment (20),
wherein the public land mobile network (100) is provided such that the user equipment (20), in order to receive the internet protocol multimedia subsystem service, is able to either use the public land mobile network (100) or a second public land mobile network (200) by using either a first access network (110) and a first serving gateway node (130) of the public land mobile network (100) or a second access network (210) and a second serving gateway node (230) of the second public land mobile network (200),
wherein the public land mobile network (100) is configured such that, while the user equipment (20) being connected to the first access network (110) of the public land mobile network (100) and the session being ongoing:
-- an inter-public land mobile network handover of the user equipment (20) occurs or is triggered such that the user equipment (20) is or is to be connected to the second access network (210) of the second public land mobile network (200) instead of being connected to the first access network (110) of the public land mobile network (100),
-- a current public land mobile network information is transmitted, by the call state control function node (150) to the application server (160), the current public land mobile network information indicating, to the application server (160), that the user equipment (20) uses the second access network (210) of the second public land mobile network (200) instead of the first access network (110) of the public land mobile network (100),
-- the application server (160) processes and/or handles legal requirements based on the current public land mobile network information.

11. System for an improved handling of an internet protocol multimedia subsystem service of a user equipment (20) in the context of an ongoing session, the system comprising the user equipment (20) and a first public land mobile network (100) according to claim 10 and a second public land mobile network (200), wherein
-- the call state control function node (150), and
-- the application server (160) are being used to enable or provide the internet protocol multimedia subsystem service of or to the user equipment (20),
wherein the user equipment (20), in order to receive the internet protocol multimedia subsystem service, is able to either use the first public land mobile network (100) or the second public land mobile network (200) by using either a first access network (110) and a first serving gateway node (130) of the first public land mobile network (100) or a second access network (210) and a second serving gateway node (230) of the second public land mobile network (200), wherein the system is configured such that, while the user equipment (20) being connected to the first access network (110) of the first public land mobile network (100) and the session being ongoing:
-- an inter-public land mobile network handover of the user equipment (20) occurs or is triggered such that the user equipment (20) is or is to be connected to the second access network (210) of the second public land mobile network (200) instead of being connected to the first access network (110) of the first public land mobile network (100),
-- a current public land mobile network information is transmitted, by the call state control function node (150) to the application server (160), the current public land mobile network information indicating, to the application server (160), that the user equipment (20) uses the second access network (210) of the second public land mobile network (200) instead of the first access network (110) of the first public land mobile network (100),
-- the application server (160) processes and/or handles legal requirements based on the current public land mobile network information.

12. Program comprising a computer readable program code which, when executed on a computer or on a network node of a first public land mobile network (100) or on a network node of a second public land mobile network (200) or in part on the network node of a first public land mobile network (100) and in part on the network node of a second public land mobile network (200), causes the computer or the network node of the first public land mobile network (100) or the network node of the second public land mobile network (200) to perform a method according one of claims 1 to 9.

13. A computer-readable storage medium having stored thereon the program of claim 12.

## Patentansprüche

1. Verfahren zur verbesserten Handhabung eines Internet-Protokoll-Multimedia-Subsystem-Dienstes einer Benutzerausrüstung (20) im Kontext einer laufenden Sitzung, wobei
- ein Rufzustandssteuerungsfunktionsknoten (150) und
- ein Anwendungsserver (160)
verwendet werden, um den Internet-Protokoll-Multimedia-Subsystem-Dienst der Benutzerausrüstung (20) zu ermöglichen oder für die Benutzerausrüstung (20) bereitzustellen, wobei die Benutzerausrüstung (20), um den Internet-Protokoll-Multimedia-Subsystem-Dienst zu empfangen, in der Lage ist, entweder ein erstes öffentliches terrestrisches Mobilfunknetz (100) oder ein zweites öffentliches terrestrisches Mobilfunknetz (200) zu verwenden, indem sie entweder ein erstes Zugangsnetz (110) und einen ersten bedienenden Gateway-Knoten (130) des ersten öffentlichen terrestrischen Mobilfunknetzes (100) oder ein zweites Zugangsnetz (210) und einen zweiten bedienenden Gateway-Knoten (230) des zweiten öffentlichen terrestrischen Mobilfunknetzes (200) verwendet, wobei, während die Benutzerausrüstung (20) mit dem ersten Zugangsnetz (110) des ersten öffentlichen terrestrischen Mobilfunknetzes (100) verbunden ist und die Sitzung läuft, das Verfahren die folgenden Schritte umfasst :
- in einem ersten Schritt findet eine Übergabe der Benutzerausrüstung (20) zwischen öffentlichen terrestrischen Mobilfunknetzen statt oder wird ausgelöst, dergestalt, dass die Benutzerausrüstung (20) mit dem zweiten Zugangsnetz (210) des zweiten öffentlichen terrestrischen Mobilfunknetzes (200) verbunden ist oder verbunden werden soll, anstatt mit dem ersten Zugangsnetz (110) des ersten öffentlichen terrestrischen Mobilfunknetzes (100) verbunden zu werden,
- in einem zweiten Schritt, der sich an den ersten Schritt anschließt oder sich teilweise mit diesem überschneidet, wird eine Information über ein momentanes öffentliches terrestrisches Mobilfunknetz durch den Rufzustandssteuerungsfunktionsknoten (150) an den Anwendungsserver (160) gesendet, wobei die Information über das momentane öffentliche terrestrische Mobilfunknetz dem Anwendungsserver (160) anzeigt, dass die Benutzerausrüstung (20) das zweite Zugangsnetz (210) des zweiten öffentlichen terrestrischen Mobilfunknetzes (200) anstelle des ersten Zugangsnetzes (110) des ersten öffentlichen terrestrischen Mobilfunknetzes (100) verwendet,
wobei - im Anschluss an den zweiten Schritt - der Anwendungsserver (160) auf der Grundlage der Information über das momentane öffentliche terrestrische Mobilfunknetz rechtliche Anforderungen verarbeitet und/oder handhabt.

2. Verfahren nach Anspruch 1, wobei die Information über das momentane öffentliche terrestrische Mobilfunknetz als Teil einer Benachrichtigungsnachricht an den Anwendungsserver (160) gesendet wird, wobei die Benachrichtigungsnachricht insbesondere eine Private-Visited-Network-Identifier-Header-Information umfasst.

3. Verfahren nach Anspruch 2, wobei die Benachrichtigungsnachricht eine Sitzungsinitiierungsprotokollnachricht ist.

4. Verfahren nach einem der vorangehenden Ansprüche, wobei - im Anschluss an den zweiten Schritt — der Anwendungsserver (160)
- Ladevorgänge und/oder
- anrufbezogene Vorgänge und/oder
- rechtmäßiges Interzeptieren
auf der Grundlage der Information über das momentane öffentliche terrestrische Mobilfunknetz verarbeitet und/oder handhabt.

5. Verfahren nach einem der vorangehenden Ansprüche, wobei - neben dem Rufzustandssteuerungsfunktionsknoten (150) und dem Anwendungsserver (160) - ein Paket-Gateway-Knoten (140) eines evolved-Packet-Kernnetzes verwendet wird, um den Internet-Protokoll-Multimedia-Subsystem-Dienst der Benutzerausrüstung (20) gemäß einem Heimroutungsszenario zu ermöglichen oder für die Benutzerausrüstung (20) gemäß einem Heimroutungsszenario bereitzustellen, unabhängig davon, ob das erste Zugangsnetz (110) des ersten öffentlichen terrestrischen Mobilfunknetzes (100) oder das zweite Zugangsnetz (210) des zweiten öffentlichen terrestrischen Mobilfunknetzes (200) durch die Benutzerausrüstung (20) verwendet wird.

6. Verfahren nach einem der vorangehenden Ansprüche, wobei der Rufzustandssteuerungsfunktionsknoten (150) einem Proxy-Rufzustandssteuerungsfunktionsknoten entspricht und insbesondere mit einem Policy-and-Charging-Rules-Function-Knoten (170) verbunden und/oder verknüpft ist und wobei der Rufzustandssteuerungsfunktionsknoten (150) insbesondere über eine Gx/Rx-Schnittstelle oder einen Gx/Rx-Referenzpunkt mit dem Policy-and-Charging-Rules-Function-Knoten (170) verbunden ist.

7. Verfahren nach Anspruch 6, wobei - vor dem zweiten Schritt - der Policy-and-Charging-Rules-Function-Knoten (170) eine Information über das öffentliche terrestrische Mobilfunknetz, das momentan durch die Benutzerausrüstung (20) verwendet wird, an den Rufzustandssteuerungsfunktionsknoten (150) sendet.

8. Verfahren nach einem der vorangehenden Ansprüche, wobei - in Abhängigkeit davon, ob das erste Zugangsnetz (110) des ersten öffentlichen terrestrischen Mobilfunknetzes (100) oder das zweite Zugangsnetz (210) des zweiten öffentlichen terrestrischen Mobilfunknetzes (200) durch die Benutzerausrüstung (20) verwendet wird - ein anderer Paket-Gateway-Knoten entweder des ersten öffentlichen terrestrischen Mobilfunknetzes (100) oder des zweiten öffentlichen terrestrischen Mobilfunknetzes (200) gemäß einem lokalen Breakout-Szenario verwendet wird, um der Benutzerausrüstung (20) den Internet-Protokoll-Multimedia-Subsystem-Dienst zu ermöglichen oder bereitzustellen.

9. Verfahren nach einem der Ansprüche 6 bis 8, wobei der Rufzustandssteuerungsfunktionsknoten (150) einem bedienenden Rufzustandssteuerungsfunktionsknoten entspricht und wobei die Benutzerausrüstung (20) eine erste Proxy-Rufzustandssteuerungsfunktion (145) des ersten öffentlichen terrestrischen Mobilfunknetzes (100) oder eine zweite Proxy-Rufzustandssteuerungsfunktion (245) des zweiten öffentlichen terrestrischen Mobilfunknetzes (200) in Abhängigkeit davon verwendet, ob das erste Zugangsnetz (110) des ersten öffentlichen terrestrischen Mobilfunknetzes (100) oder das zweite Zugangsnetz (210) des zweiten öffentlichen terrestrischen Mobilfunknetzes (200) durch die Benutzerausrüstung (20) verwendet wird, wobei - vor dem zweiten Schritt - der Policy-and-Charging-Rules-Function-Knoten (170) eine Information über das öffentliche terrestrisches Mobilfunknetz, das momentan durch die Benutzerausrüstung (20) verwendet wird, an den bedienenden Rufzustandssteuerungsfunktionsknoten sendet.

10. Öffentliches terrestrisches Mobilfunknetz (100) für eine verbesserte Handhabung eines Internet-Protokoll-Multimedia-Subsystem-Dienstes einer Benutzerausrüstung (20) im Kontext einer laufenden Sitzung, wobei das öffentliche terrestrische Mobilfunknetz (100) einen Anwendungsserver (160) und einen Rufzustandssteuerungsfunktionsknoten (150) umfasst, wobei
- den Rufzustandssteuerungsfunktionsknoten (150) des öffentlichen terrestrischen Mobilfunknetzes (100) und
- der Anwendungsserver (160) des öffentlichen terrestrischen Mobilfunknetzes (100) verwendet werden, um den Internet-Protokoll-Multimedia-Subsystem-Dienst der Benutzerausrüstung (20) zu ermöglichen oder für die Benutzerausrüstung (20) bereitzustellen,
wobei das öffentliche terrestrisches Mobilfunknetz (100) so bereitgestellt ist, dass die Benutzerausrüstung (20), um den Internet-Protokoll-Multimedia-Subsystem-Dienst zu empfangen, in der Lage ist, entweder das erste öffentliche terrestrische Mobilfunknetz (100) oder ein zweites öffentliches terrestrisches Mobilfunknetz (200) zu verwenden, indem sie entweder ein erstes Zugangsnetz (110) und einen ersten bedienenden Gateway-Knoten (130) des ersten öffentlichen terrestrischen Mobilfunknetzes (100) oder ein zweites Zugangsnetz (210) und einen zweiten bedienenden Gateway-Knoten (230) des zweiten öffentlichen terrestrischen Mobilfunknetzes (200) verwendet,
wobei das öffentliche terrestrische Mobilfunknetz (100) so eingerichtet ist, dass, während die Benutzerausrüstung (20) mit dem ersten Zugangsnetz (110) des öffentlichen terrestrischen Mobilfunknetzes (100) verbunden ist und die Sitzung läuft :
- eine Übergabe der Benutzerausrüstung (20) zwischen öffentlichen terrestrischen Mobilfunknetzen stattfindet oder ausgelöst wird, dergestalt, dass die Benutzerausrüstung (20) mit dem zweiten Zugangsnetz (210) des zweiten öffentlichen terrestrischen Mobilfunknetzes (200) verbunden ist oder verbunden werden soll, anstatt mit dem ersten Zugangsnetz (110) des öffentlichen terrestrischen Mobilfunknetzes (100) verbunden zu werden,
- eine Information über ein momentanes öffentliches terrestrisches Mobilfunknetz durch den Rufzustandssteuerungsfunktionsknoten (150) an den Anwendungsserver (160) gesendet wird, wobei die Information über das momentane öffentliche terrestrische Mobilfunknetz dem Anwendungsserver (160) anzeigt, dass die Benutzerausrüstung (20) das zweite Zugangsnetz (210) des zweiten öffentlichen terrestrischen Mobilfunknetzes (200) anstelle des ersten Zugangsnetzes (110) des ersten öffentlichen terrestrischen Mobilfunknetzes (100) verwendet,
- der Anwendungsserver (160) auf der Grundlage der Information über das momentane öffentliche terrestrische Mobilfunknetz rechtliche Anforderungen verarbeitet und/oder handhabt.

11. System für eine verbesserte Handhabung eines Internet-Protokoll-Multimedia-Subsystem-Dienstes einer Benutzerausrüstung (20) im Kontext einer laufenden Sitzung, wobei das System die Benutzerausrüstung (20) und ein erstes öffentliches terrestrisches Mobilfunknetz (100) nach Anspruch 10 und ein zweites öffentliches terrestrisches Mobilfunknetz (200) umfasst, wobei
- der Rufzustandssteuerungsfunktionsknoten (150) und
- der Anwendungsserver (160) verwendet werden, um den Internet-Protokoll-Multimedia-Subsystem-Dienst der Benutzerausrüstung (20) zu ermöglichen oder für die Benutzerausrüstung (20) bereitzustellen,
wobei die Benutzerausrüstung (20), um den Internet-Protokoll-Multimedia-Subsystem-Dienst zu empfangen, in der Lage ist, entweder das erste öffentliche terrestrisches Mobilfunknetz (100) oder das zweite öffentliche terrestrische Mobilfunknetz (200) zu verwenden, indem sie entweder ein erstes Zugangsnetz (110) und einen ersten bedienenden Gateway-Knoten (130) des ersten öffentlichen terrestrischen Mobilfunknetzes (100) oder ein zweites Zugangsnetz (210) und einen zweiten bedienenden Gateway-Knoten (230) des zweiten öffentlichen terrestrischen Mobilfunknetzes (200) verwendet, wobei, wobei das System so eingerichtet ist, dass, während die Benutzerausrüstung (20) mit dem ersten Zugangsnetz (110) des ersten öffentlichen terrestrischen Mobilfunknetzes (100) verbunden ist und die Sitzung läuft :
- eine Übergabe der Benutzerausrüstung (20) zwischen öffentlichen terrestrischen Mobilfunknetzen stattfindet oder ausgelöst wird, dergestalt, dass die Benutzerausrüstung (20) mit dem zweiten Zugangsnetz (210) des zweiten öffentlichen terrestrischen Mobilfunknetzes (200) verbunden ist oder verbunden werden soll, anstatt mit dem ersten Zugangsnetz (110) des ersten öffentlichen terrestrischen Mobilfunknetzes (100) verbunden zu werden,
- eine Information über ein momentanes öffentliches terrestrisches Mobilfunknetz durch den Rufzustandssteuerungsfunktionsknoten (150) an den Anwendungsserver (160) gesendet wird, wobei die Information über das momentane öffentliche terrestrische Mobilfunknetz dem Anwendungsserver (160) anzeigt, dass die Benutzerausrüstung (20) das zweite Zugangsnetz (210) des zweiten öffentlichen terrestrischen Mobilfunknetzes (200) anstelle des ersten Zugangsnetzes (110) des ersten öffentlichen terrestrischen Mobilfunknetzes (100) verwendet,
- der Anwendungsserver (160) auf der Grundlage der Information über das momentane öffentliche terrestrische Mobilfunknetz rechtliche Anforderungen verarbeitet und/oder handhabt.

12. Programm, umfassend einen computerlesbaren Programmcode, der, wenn er auf einem Computer oder auf einem Netzknoten eines ersten öffentlichen terrestrischen Mobilfunknetzes (100) oder auf einem Netzknoten eines zweiten öffentlichen terrestrischen Mobilfunknetzes (200) oder teilweise auf dem Netzknoten eines ersten öffentlichen terrestrischen Mobilfunknetzes (100) und teilweise auf dem Netzknoten eines zweiten öffentlichen terrestrischen Mobilfunknetzes (200) ausgeführt wird, den Computer oder den Netzknoten des ersten öffentlichen terrestrischen Mobilfunknetzes (100) oder den Netzknoten des zweiten öffentlichen terrestrischen Mobilfunknetzes (200) veranlasst, ein Verfahren nach einem der Ansprüche 1 bis 9 auszuführen.

13. Computerlesbares Speichermedium, auf dem das Programm nach Anspruch 12 gespeichert ist.

## Revendications

1. Procédé pour une gestion améliorée d'un service de sous-système multimédia de protocole Internet d'un équipement utilisateur (20) dans le contexte d'une session en cours, dans lequel
- un nœud de fonction de commande d'état d'appel (150), et
- un serveur d'application (160)
sont utilisés pour permettre ou fournir le service de sous-système multimédia de protocole Internet de ou à l'équipement utilisateur (20),
dans lequel l'équipement utilisateur (20), afin de recevoir le service de sous-système multimédia de protocole Internet, est capable d'utiliser soit un premier réseau mobile terrestre public (100), soit un second réseau mobile terrestre public (200) en utilisant soit un premier réseau d'accès (110) et un premier nœud passerelle de desserte (130) du premier réseau mobile terrestre public (100), soit un second réseau d'accès (210) et un second nœud passerelle de desserte (230) du second réseau mobile terrestre public (200), dans lequel, alors que l'équipement utilisateur (20) est connecté au premier réseau d'accès (110) du premier réseau mobile terrestre public (100) et que la session est en cours, le procédé comprend les étapes suivantes :
- dans une première étape, un transfert entre réseaux mobiles terrestres publics de l'équipement utilisateur (20) se produit ou est déclenché de telle sorte que l'équipement utilisateur (20) est ou doit être connecté au second réseau d'accès (210) du second réseau mobile terrestre public (200) au lieu d'être connecté au premier réseau d'accès (110) du premier réseau mobile terrestre public (100),
- dans une seconde étape, consécutive à la première étape ou la chevauchant partiellement, une information de réseau mobile terrestre public actuel est transmise, par le nœud de fonction de commande d'état d'appel (150) au serveur d'application (160), l'information de réseau mobile terrestre public actuel indiquant, au serveur d'application (160), que l'équipement utilisateur (20) utilise le second réseau d'accès (210) du second réseau mobile terrestre public (200) au lieu du premier réseau d'accès (110) du premier réseau mobile terrestre public (100),
dans lequel - suite à la seconde étape - le serveur d'application (160) traite et/ou gère des obligations légales sur la base de l'information de réseau mobile terrestre public actuel.

2. Procédé selon la revendication 1, dans lequel les l'information de réseau mobile terrestre public actuel est transmise en tant que partie d'un message de notification au serveur d'application (160), dans lequel le message de notification comprend en particulier une information d'entête d'identificateur de réseau privé visité.

3. Procédé selon la revendication 2, dans lequel le message de notification est un message de protocole d'initiation de session.

4. Procédé selon l'une des revendications précédentes, dans lequel - à la suite de la seconde étape - le serveur d'application (160) traite et/ou gère
- des procédures de taxation et/ou
- des procédures liées aux appels et/ou
- une interception légale,
sur la base de l'information de réseau mobile terrestre public actuel.

5. Procédé selon l'une des revendications précédentes, dans lequel - outre le nœud de fonction de commande d'état d'appel (150) et le serveur d'application (160) - un nœud passerelle de paquets (140) d'un réseau central de paquets évolué est utilisé pour permettre ou fournir le service de sous-système multimédia de protocole Internet de ou à l'équipement utilisateur (20) selon un scénario de routage domestique, indépendamment du fait que le premier réseau d'accès (110) du premier réseau mobile terrestre public (100) ou le second réseau d'accès (210) du second réseau mobile terrestre public (200) soit utilisé par l'équipement utilisateur (20).

6. Procédé selon l'une des revendications précédentes, dans lequel le nœud de fonction de commande d'état d'appel (150) correspond à un nœud de fonction de commande d'état d'appel mandataire et est notamment connecté et/ou associé à un nœud de fonction de règles de politique et de taxation (170), et le nœud de fonction de commande d'état d'appel (150) étant notamment connecté au nœud de fonction de règles de politique et de taxation (170) via une interface ou un point de référence Gx/Rx.

7. Procédé selon la revendication 6, dans lequel, avant la seconde étape, le nœud de fonction de règles de politique et de taxation (170) transmet une information concernant le réseau mobile terrestre public actuellement utilisé par l'équipement utilisateur (20) au nœud de fonction de commande d'état d'appel (150).

8. Procédé selon l'une des revendications précédentes, dans lequel - selon que le premier réseau d'accès (110) du premier réseau mobile terrestre public (100) ou le second réseau d'accès (210) du second réseau mobile terrestre public (200) est utilisé par l'équipement utilisateur (20) - un nœud passerelle de paquets différent, soit du premier réseau mobile terrestre public (100), soit du second réseau mobile terrestre public (200), est utilisé, selon un scénario de décrochage local, pour permettre ou fournir le service de sous-système multimédia de protocole Internet de ou à l'équipement utilisateur (20).

9. Procédé selon l'une des revendications 6 à 8, dans lequel le nœud de fonction de commande d'état d'appel (150) correspond à un nœud de fonction de commande d'état d'appel de desserte, et dans lequel l'équipement utilisateur (20) utilise une première fonction proxy de commande d'état d'appel (145) du premier réseau mobile terrestre public (100) ou une seconde fonction proxy de commande d'état d'appel (245) du second réseau mobile terrestre public (200) en fonction du fait que le premier réseau d'accès (110) du premier réseau mobile terrestre public (100) ou le second réseau d'accès (210) du second réseau mobile terrestre public (200) est utilisé par l'équipement utilisateur (20), dans lequel, avant la seconde étape, le nœud de fonction de règles de politique et de taxation (170) transmet une information concernant le réseau mobile terrestre public actuellement utilisé par l'équipement utilisateur (20) au nœud de fonction de commande d'état d'appel de desserte.

10. Réseau mobile terrestre public (100) pour une gestion améliorée d'un service de sous-système multimédia de protocole Internet d'un équipement utilisateur (20) dans le contexte d'une session en cours, dans lequel le réseau mobile terrestre public (100) comprend un serveur d'application (160) et un nœud de fonction de commande d'état d'appel (150), dans lequel
- le nœud de fonction de commande d'état d'appel (150) du réseau mobile terrestre public (100), et
- le serveur d'application (160) du réseau mobile terrestre public (100)
sont utilisés pour permettre ou fournir le service de sous-système multimédia de protocole Internet de ou à l'équipement utilisateur (20),
dans lequel le réseau mobile terrestre public (100) est fourni de telle sorte que l'équipement utilisateur (20), afin de recevoir le service de sous-système multimédia de protocole Internet, est capable d'utiliser soit le réseau mobile terrestre public (100) soit un second réseau mobile terrestre public (200) en utilisant soit un premier réseau d'accès (110) et un premier nœud passerelle de desserte (130) du réseau mobile terrestre public (100), soit un second réseau d'accès (210) et un second nœud passerelle de desserte (230) du second réseau mobile terrestre public (200),
dans lequel le réseau mobile terrestre public (100) est configuré de telle sorte que, pendant que l'équipement utilisateur (20) est connecté au premier réseau d'accès (110) du réseau mobile terrestre public (100) et que la session est en cours :
- un transfert entre réseaux mobiles terrestres publics de l'équipement utilisateur (20) se produit ou est déclenché de telle sorte que l'équipement utilisateur (20) est ou doit être connecté au second réseau d'accès (210) du second réseau mobile terrestre public (200) au lieu d'être connecté au premier réseau d'accès (110) du réseau mobile terrestre public (100),
- une information de réseau mobile terrestre public actuel est transmise, par le nœud de fonction de commande d'état d'appel (150) au serveur d'application (160), l'information de réseau mobile terrestre public actuel indiquant, au serveur d'application (160), que l'équipement utilisateur (20) utilise le second réseau d'accès (210) du second réseau mobile terrestre public (200) au lieu du premier réseau d'accès (110) du réseau mobile terrestre public (100),
- le serveur d'application (160) traite et/ou gère des obligations légales sur la base de l'information de réseau mobile terrestre public actuel.

11. Système pour une gestion améliorée d'un service de sous-système multimédia de protocole Internet d'un équipement utilisateur (20) dans le contexte d'une session en cours, le système comprenant l'équipement utilisateur (20) et un premier réseau mobile terrestre public (100) selon la revendication 10 et un second réseau mobile terrestre public (200), dans lequel
- le nœud de fonction de commande d'état d'appel (150), et
- le serveur d'application (160) sont utilisés pour permettre ou fournir le service de sous-système multimédia de protocole Internet de ou à l'équipement utilisateur (20), dans lequel l'équipement utilisateur (20), afin de recevoir le service de sous-système multimédia de protocole Internet, est capable d'utiliser soit le premier réseau mobile terrestre public (100), soit le second réseau mobile terrestre public (200) en utilisant soit un premier réseau d'accès (110) et un premier nœud passerelle de desserte (130) du premier réseau mobile terrestre public (100), soit un second réseau d'accès (210) et un second nœud passerelle de desserte (230) du second réseau mobile terrestre public (200), dans lequel le système est configuré de telle sorte que, alors que l'équipement utilisateur (20) est connecté au premier réseau d'accès (110) du premier réseau mobile terrestre public (100) et que la session est en cours :
- un transfert entre réseaux mobiles terrestres publics de l'équipement utilisateur (20) se produit ou est déclenché de telle sorte que l'équipement utilisateur (20) est ou doit être connecté au second réseau d'accès (210) du second réseau mobile terrestre public (200) au lieu d'être connecté au premier réseau d'accès (110) du réseau mobile terrestre public (100),
- une information de réseau mobile terrestre public actuel est transmise, par le nœud de fonction de commande d'état d'appel (150) au serveur d'application (160), l'information de réseau mobile terrestre public actuel indiquant, au serveur d'application (160), que l'équipement utilisateur (20) utilise le second réseau d'accès (210) du second réseau mobile terrestre public (200) au lieu du premier réseau d'accès (110) du premier réseau mobile terrestre public (100),
- le serveur d'application (160) traite et/ou gère des obligations légales sur la base de l'information de réseau mobile terrestre public actuel.

12. Programme comprenant un code de programme lisible par ordinateur qui, lorsqu'il est exécuté sur un ordinateur ou sur un nœud de réseau d'un premier réseau mobile terrestre public (100) ou sur un nœud de réseau d'un second réseau mobile terrestre public (200) ou en partie sur le nœud de réseau d'un premier réseau mobile terrestre public (100) et en partie sur le nœud de réseau d'un second réseau mobile terrestre public (200), amène l'ordinateur ou le nœud de réseau du premier réseau mobile terrestre public (100) ou le nœud de réseau du second réseau mobile terrestre public (200) à exécuter un procédé selon l'une des revendications 1 à 9.

13. Support de stockage lisible par ordinateur sur lequel est stocké le programme de la revendication 12.
